# EUROPEAN PATENT APPLICATION

(11) **EP 1 786 002 A2**
(43) Date of publication of application: **16.05.2007**
(21) Application number: 06121018.3
(22) Date of filing: 21.09.2006
(51) Int. Cl.: H01B 13/26

(54) **High-efficiency armored cable, method and apparatus for making the same**

(30) Priority: 11.11.2005 IT SV20050038
(71) Applicant: I.L. Industria di Leivi S.r.l., 16140 Leivi (Genova) (IT)
(72) Inventor: Gai, Giorgio, I-16167, Genova (IT); Malaspina, Bindo, I-16129, Genova (IT)
(74) Representative: Karaghiosoff, Giorgio Alessandro

(57) **Abstract**

Method for making a cable, particularly a so called armored cable, comprising following steps:
A- providing a rope (3) constituting the core of said armored cable
B- providing at least an armor winding band-like member (1)

wherein
said armor winding band-like member is a so called preformed band (2) i.e. bent substantially about the longitudinal axis of the band and/or an axis parallel to the axis of longitudinal development of the band, and comprising in addition the step of
D- covering said rope by winding at least one, preferably two, preformed bands (2) such that the concave region of the bend of said preformed band is faced towards the rope.

## Description

The present invention relates to a method for producing a cable, particularly a so called armored cable.

Methods of such type are known and widely used. While these methods satisfactorily serve their function, they have some drawbacks.

Prior art methods provide an elongated member, typically a band wound about a rope, preferably a multiwire rope, to generate the so called armor and subsequently it is hammered to secure the armor to the inner multiwire rope.

In prior art methods it is therefore necessary to have an armor winding elongated member so called armor member, generally composed of a metal band that is helically wound around the rope, as a single or double one. Subsequently said band is hammered by so called hammering tools typically rotary hammering tools, that squeeze the elongated member or band against the rope. Armored cables of said type are often used in combination with a sheath, for driving and/or transmitting mechanical drives, particularly in motor and/or ship field.

Tipically and without any limitations armored cables have sections from 1,5 to 8 mm and tensile strengths from 800 to 2000 N/mm². Moreover traditionally armored cables are used on lenghts of 20 m at most.

However prior art armored cables have a main drawback, due to the fact that the band hammered and wound about the rope has a series of "crests" at the edges of the band when it is wound. Due to the material conservation and the stretching of the band helically wound about the rope constituting the core of the armored cable a saddle effect is generated on the band section, leading the band edges to such a deformation that edges are in a crest-like raised condition. Moreover, since the band is helically wound about the rope, said raised edges, i.e. crests, of the band when it is wound have a substantially transverse orientation with respect to the sliding direction of the cable inside the sheath, that is with respect to the length development of the cable. This leads prior art armored cable to have a low efficiency, about 50%. The efficiency is measured by relating the force needed to move a specific known load, by the armored cable whose efficiency has to be estimated, to the force nedded to move said known load without the armored cable. In other words in advance the force needed to directly move a specific load is measured, that is by directly acting on the load, and again the force needed to move said load in a not direct way is measured, that is by acting on the load with the armored cable under measurement. The ratio between the two forces determines the efficiency of the cable under measurement. In prior art armored cables, the presence of raised edges, i.e. crests, of the band absorbs a considerable part of the energy required for driving a mechanical drive, since the presence of raised edges produces a considerable friction on the sheath operatively associated to the armored cable. Therefore the yield or efficiency of prior art armored cables is statistically low, and generally it is 50-55%.

Moreover the presence of band edges or crests leads to worse problems when said armored cable has to be mounted according to a particularly "winding" path. Curves accentuate effects of the contact between crests of the band constituting the outermost part of the armored cable and the sheath operatively associated to the cable, by further increasing the friction and reducing the efficiency.

By defining the concept of cable efficiency as the relation between the transmitted force and applied force in prior art armored cable there is a low efficiency value.

A further drawback due to the presence of above raised edges or crests is that the inner part of the sheath wherein the armored cable slides is subjected to precocious wear, and so it is necessary to increase the frequency of maintenance and/or to replace the sheath, and/or to provide anti-friction oversized covers on the sheath.

Moreover the prior art armored cable has a further drawback related to the fact that the winding according to an helical path of an elongated or band-like member along the rope, due to obvious deformations related to helical winding geometry of a band having a typical rectangular section about a solid cylinder as the rope, causes the presence of an undesired saddle effect of the outer surface of the band, before hammering, resulting more squeezed at the center and less squeezed at corners, thus actually making corners or crests at acute angle. This defect in prior art is corrected by hammering taking again corners at about 90° value i.e. at sharp corner. However the solving of this drawback causes rotary hammers to be more worn out, during the hammering they hit upon said acute corners, in order to reduce the profile.

The aim of the present invention is to produce a cable, particularly an armored cable, a method for making it and an apparatus for making an armored cable according to the present invention that can overcome drawbacks of known armored cables in an easy and inexpensive way.

The invention achieves above aims by a method for making a cable, particularly a so called armored cable, comprising following steps:
A- providing a rope constituting the core of said armored cable
B- providing at least an armor winding band-like member
   and wherein
   said armor winding band-like member is a so called preformed band that is bent substantially about the longitudinal axis of the band and/or an axis parallel to the axis of longitudinal development of the band, and comprising in addition the step of
D- covering said rope by winding at least one, preferably two, preformed bands such that the concave region of the bend of said preformed band is faced towards the rope or is the side contacting said rope.

Thus the armored cable produced according to the above method has an outer surface substantially free of crests, and/or sharp corners and/or raised edges, since the preformed band wound about the rope in order to make the armored cable, being previously permanently deformed in the bend condition about its longitudinal axis and/or about an axis parallel to its longitudinal axis, and being wound about a rope so that the concave region of the bend is faced towards the rope, causes the outer surface of the armored cable to be free of crests or raised edges that are tipical of prior art armored cables.

Thanks to the above the armored cable according to the present invention has a high efficiency and/or high yield, since its outer surface is substantially free of crests or raised edges and by contacting the inner surface of the sheath to which said armored cable is operatively associated it produces a low coefficient of friction.

According to an advantageous embodiment variant of the present method it is possible to
A- provide a rope constituting the core of said armored cable
B- provide at least an armor winding band
C- make a permanent deformation of said armor winding band by bending said armor winding band substantially about the longitudinal axis of the band and/or an axis parallel to the axis of longitudinal development of the band, achieving a so called preformed band
D- cover said rope by winding at least one, preferably two, preformed bands such that the concave region of the bend of said preformed band is faced towards the rope or it is the side contacting the rope.

According to such embodiment variant it is provided to make said preformed band during the process for making the armored cable, from a band having a substantially not bent section, that is permanently deformed by bending it about the longitudinal axis of the band and/or an axis parallel to the axis of longitudinal development of the band, achieving a so called preformed band.

It is therefore possible to produce both a preformed band made subtantially during the process for winding the armored cable, and an armored cable when making the band itself, so a process that is separated and different with respect to the one for making the armored cable. It is also possible to provide to use a preformed band already bent in advance and to go on with a modification of the bend when making the armored cable.

According to an advantageous aspect of the present invention the preformed band is hammered about the rope in order to secure it to the rope; during hammering the preformed band is at least partially elastically deformed in the way partially flattening the bend. Thus the preformed band adheres better to the rope and since the flattening deformation is at least a partially elastic one, the memory shape of the band tends to keep corners of the bands adherent to the rope, actually avoiding prior art drawbacks related to crests.

Moreover a further advantage related to the fact of arranging the armored cable produced in such way in paths having curves is obtained: the presence of the shape memory and elastic deformation in a way flattening the preformed band allows the preformed band to remain perfectly or almost perfectly adherent to the rope, further reducing friction, in a bend of the cable.

An apparatus for making an armored cable is also an object of the present invention comprising:
at least one, preferably two, coils of armor winding band
at least a device for guiding a rope constituting the core of said armored cable
at least a device for permanently deforming said armor winding band by bending said armor winding band substantially about the longitudinal axis of the band and/or an axis parallel to the axis of longitudinal development of the band, achieving a so called preformed band.
at least one, preferably two devices for winding said preformed band/bands about said rope.

According to the apparatus of the present invention in various and alternative embodiments it is possible to provide the device for permanently deforming said armor winding band by bending said armor winding band susbtantially about the longitudinal axis of the band and/or an axis parallel to the axis of the longitudinal development of the band, achieving a so called preformed band, both upstream and downstream of said reels winding the armor winding band.

Generally the armor winding band is provided as wound in large coils that are unwound and wound on reels from which it is further unwound during the real process for making the armored cable. The device for the permanent deformation, preferably a drawing and/or hammering and/or lamination and/or rolling and/or extrusion and/or bending device can be provided at different moments of the manufacturing process and/or apparatus areas, in order to achieve different layout requirements of the apparatus. For example it is possible to provide said device to be positioned directly downstream of the coil of armor winding band, having a not bent section, before winding the band in reels, in order to make coils of preformed band, or said device can be positioned directly downstream of reels, that therefore can be band coils having a substantially not bent section, and upstream of the device winding the band about the rope, in order to make the bending permanent deformation of the band upstream of the hammering and/or winding process.

The present invention relates also to a cable particularly an armored cable comprising at least a rope constituting the core of said armored cable, about which rope at least one, preferably two armor winding elongated members are helically wound and wherein said armor winding elongated member/members or armor band/bands are a so called preformed band/bands, that is/are bent about the longitudinal axis of the band and/or an axis parallel to the axis of the longitudinal development of the band so that the concave region of the bend of said preformed band is faced towards the rope.

Such cable, in addition to above advantages, has the further advantage of reducing maintenance interventions for the sheath, and/or of providing sheaths having a reduced anti-friction covering thickness, even no thickness.

Advantageously such a cable has a very high efficency, about 10% above usual prior art armored cables.

Further features and improvements are object of dependent claims.

Characteristics of the invention and advantages deriving therefrom will be more clear from the following detailled description of annexed drawings, wherein:
fig.1 is an armored cable
fig.2 is an armored cable with a single winding
fig.3 is a section of a prior art winding band according to various deformations during the winding and hammering process
fig.4 is a present invention preformed band according to various deformations during the winding and hammering process
fig.5 is an outer profile of a prior art armored cable
fig.6 is an outer profile of a present invention armored cable
fig.7 is a longitudinal section of a prior art armored cable
fig.8 is a cross section of a band according to the present invention with the bending angle in evidence.
fig.9 is a possible method for the permanent deformation of a preformed band according to the present invention
fig.10 is a cross-section of the preformed band according to the present invention
fig.11 is a cross section of the cable according to the present invention wherein there is shown the preformed cable before elastic deformation due to hammering it against the rope

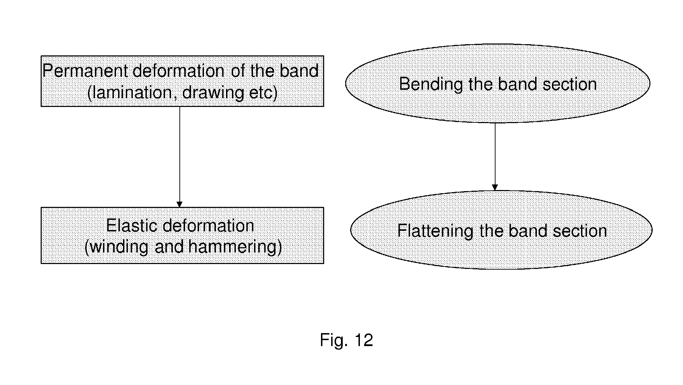

fig.12 is a comparison between deformations and modifications of the band section
fig.13 is an example of a possible apparatus according to the present invention

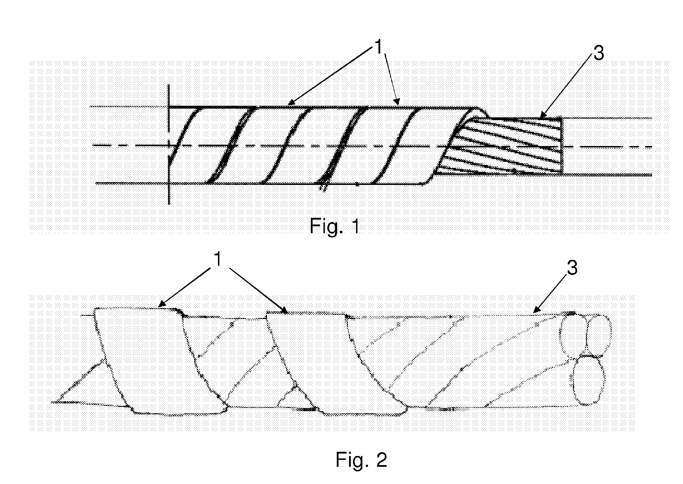

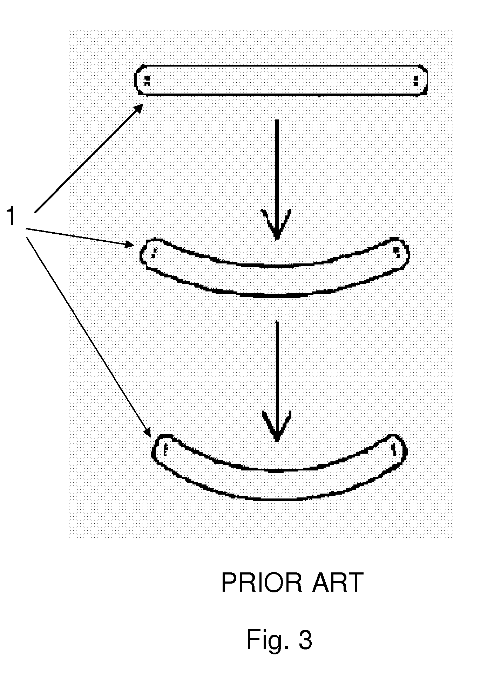

Referring to figs. 1 and 2 it is possible to note the composition of an armored cable. An elongated member 1 can be seen in figures, tipically a band or band-like member that is wound about a rope 3, preferably a multiwire rope, in order to produce the so called armor and subsequently it is hammered to secure the armor to the inner multiwire rope 3.

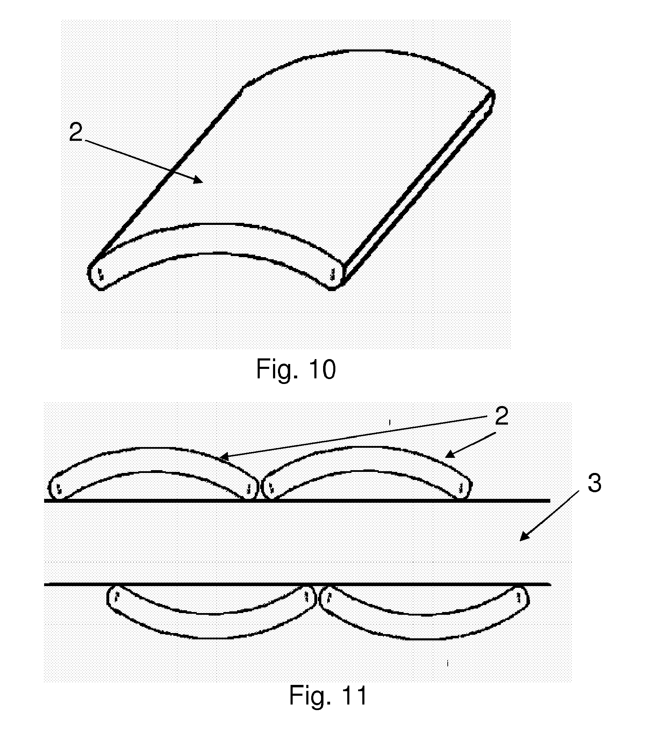

The cable in accordance with the present invention comprises at least a rope 3 constituting the core of said armored cable, about which rope 3 at least one, preferably two armor winding elongated members 1 are helically wound wherein said armor winding elongated member/members or armor band/bands are a so called preformed band/bands 2, i.e. bent about the longitudinal axis of the band and/or an axis parallel to the axis of longitudinal development of the band such that the concave region of the bend of said preformed band is faced towards the rope, such as shown in fig.11.

The prior art band-like member 1 has a flat cross section, such as shown at the top of fig.3. In fig.3 there is shown also the progressive deformation the general band-like member, having firstly a flat cross section, is subjected to during winding and/or hammering process.

Advantagously the cable according to the present invention provides to wind the rope by at least a band-like member as a preformed band 2.

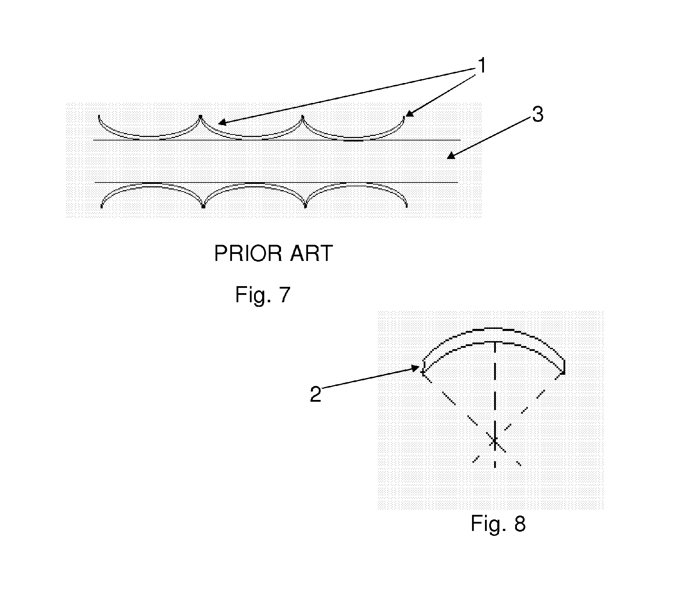

The preformed band 2 is bent about the longitudinal axis of the band and/or an axis parallel to the axis of longitudinal development of the band and it is wound about the rope 3 such that the concave region of the bend of said preformed band is faced towards the rope such as shown in fig.11. Referring to fig.10 and to fig.8 the profile of the cross section of the preformed band can be seen wherein preferably the circumference angle about which the preformed band is bend is of 30° to 90°, preferably of 60°. The radius of curvature is 1 to 9 mm and preferably 4 mm.

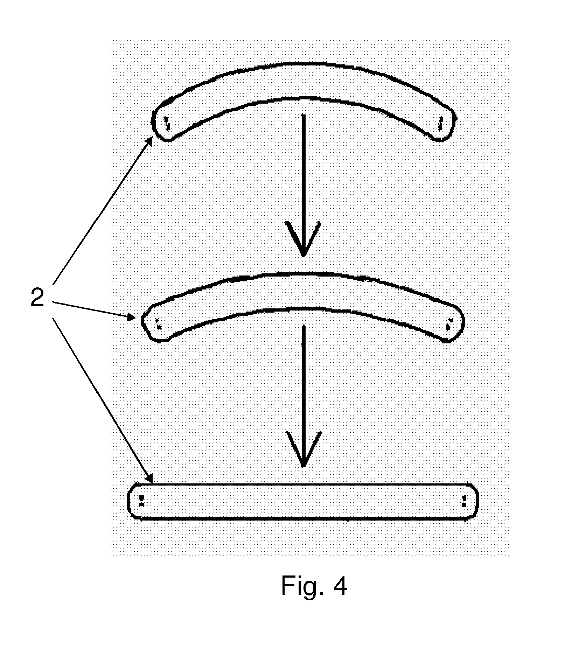

The fact of winding and/or hammering said preformed band 2 on said rope 3, causes said preformed band 2 to be elastically deformed at least partially flattening said bend such as shown in fig.4. On the contrary such as shown in fig.3 in prior art cable the deformation following the hammering and winding action deformes the winding band-like member 1 such that the prior art band has a series of "crests" at band edges and it has a curved "saddle" shape with the convex portion faced towards the rope, with above drawbacks. Substantially in prior art after winding action there is a cross section such as the one shown in fig.7 due to deformations shown in fig.3.

On the contrary the cable according to the present invention provides said preformed band 2 to have a cross section like a circunference arc with the band not wound on the rope such as shown in fig. 10 and fig.11 and when the preformed band 2 is wound on the rope 3 said circunference arc-like cross section is deformed at least partially flattening said bend by at least a partial elastic deformation such as shown in fig.4. Thus preformed band edges remain adherent to the rope advantageously reducing the friction.

It is important to note that according to one of the advantageous embodiments of the present invention first there is a band having at first a not bend section, it is permanently bent by lamination or drawing or the like till it takes a bend according to a longitudinal axis. Subsequently said band is elastically deformed at least partially flattening against the rope constituting the core of the armored cable. The flattening deformation can be of the total or partial type, for example in fig.4 a total elastically flattening of the section is achieved. However the flattening can be also only a partial one, i.e. reducing the angle of curvature of the band.

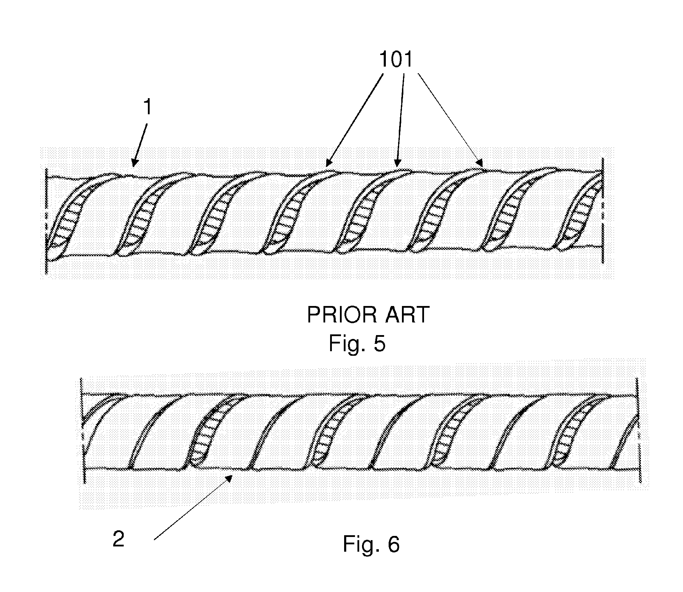

Thus an outer shape of the cable is obtained that is different from the one of a cable made according to prior art such as shown in figs. 5 and 6.

In fig.5 an armored cable made according to prior art can be seen wherein sharp corners or crests 101 of the band can be clearly noticed and producing a high friction on the outer sheath operatively surrounding the cable. On the contrary in fig.6 the outer surface of the cable made according to the present invention can be seen that is substantially free from sharp corners or raised edges that on the contrary are present in the prior art cable. Thus by the cable according to the present invention friction effects are advantageously removed and an high efficiency cable is achieved.

The rope 3 is preferably a multiwire rope, i.e. it is composed of two, three or more wires of the rope, particularly said rope is an helicoidal one and particularly it is of the so called "spiroid" and/or "strand" type.

Moreover it is provided for the profile of the inner surface of said preformed band 2 wound on said rope to at least partially follow the outer profile of said multiwire rope 3 creating at least partially on said profile of the inner surface of said preformed band 2 a series of consecutive depressions and projections associated to corresponding projections and depressions of the outer profile of said multiwire rope 3.

According to further preferred and advantageous manufacturing specifications the rope is made of simple uncovered steel/galvanized steel/stainless steel, and the winding member or preformed band is made of simple uncovered steel/stainless steel.

The tensile strength of the preformed band is from 500 N/mm² to 1400 N/mm², preferably from 600 N/mm² to 1000 N/mm².

According to further manufacturing variants there are provided two, three, four or more armor winding elongated members and at least one of said armor winding elongated members is composed of a preformed band 2 i.e. bent about the longitudinal axis of the band and/or an axis parallel to the axis of longitudinal development of the band said bend being a permanent deformation of an armor winding band having a flat section obtained by drawing and/or hammering and/or laminating and/or rolling and/or extruding and/or bending said armor winding band 1 by bending said armor winding band 1 substantially about the longitudinal axis of the band and/or an axis parallel to the axis of longitudinal development of the band.

Moreover there can be provided to plastic-coat and/or cover the cable with synthetic and/or plastic material.

According to an advantagous aspect of the present invention the preformed band 2 is hammered about the rope in order to secure it to the rope; during hammering the preformed band 2 is at least partially elastically deformed at least partially flattening the bend such as shown in fig.4. Thus the preformed band better adheres to the rope and since the flattening deformation is at least a partial elastic one, the shape memory of the band tends to keep corners of the band adherent to the rope, actually avoiding prior art drawbacks related to crests such as shown in fig.3.

A further advantage related to the fact of arranging the armored cable made in such way in paths having curves is achieved: the presence of the shape memory and elastic deformation in a way flattening the preformed band allows the preformed band to remain perfectly or almost perfectly adherent to the rope at the region of rope edges, further reducing friction, in a bend of the cable, while in the case of a band curve a prior art cable does not follow the curve path and does not remain adherent to the rope, increasing undesired effects of a greater friction.

On the contrary the present invention cable provides the preformed cable to be bent due to shape memory and to recover a part of the elastic flattening deformation suffered during hammering, advantageously following the curve path of the rope or band.

The present invention relates also to a method for making a cable, particularly a so called armored cable, comprising steps of:
A- providing a rope 3 constituting the core of said armored cable
B- providing at least an armor winding band-like member 1 and wherein
   said armor winding band-like member is a so called preformed band 2 i.e. bent substantially about the longitudinal axis of the band and/or an axis parallel to the axis of longitudinal development of the band, and comprising in addition the step of
D- covering said rope by winding at least one, preferably two, preformed bands 2 such that the concave region of the bend of said preformed band is faced towards the rope.

Thus a cable according to the present invention can be obtained starting from a preformed band 2 and a rope.

According to a further advantageous variant it is possible to provide the method according to the present invention to comprise steps of:
A- providing a rope 3 constituting the core of said armored cable
B- providing at least an armor winding band 1
C- making a permanent deformation of said armor winding band 1 by bending said armor winding band 1 substantially about the longitudinal axis of the band and/or an axis parallel to the axis of longitudinal development of the band, achieving a so called preformed band 2
D- covering said rope by winding at least one, preferably two, preformed bands 2 such that the concave region of the bend of said preformed band is faced towards the rope.

According to this embodiment of the method the provision of the preformed band 2 is provided to be made to coincide with the manufacturing of the armored cable or the process for making the armored cable is provided to comprise also the step for producing the preformed band starting from a band having flat section, i.e. a not bent one, such as for example prior art bands.

Thus starting from a general band-like member 1 there can be obtained a preformed band 2 during the manufacturing of the armored cable.

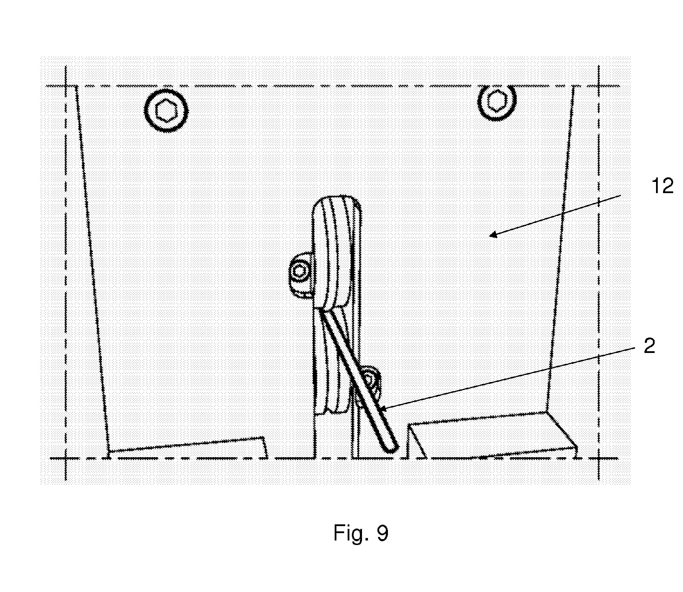

The permanent deformation of said armor winding band 1 about substantially the longitudinal axis of the band and/or an axis parallel to the axis of longitudinal development of the band, obtaining a so called preformed band 2, occurs by drawing and/or hammering and/or lamination and/or rolling and/or extrusion and/or bending operations such as shown for example in fig.9.

According to a further variant the method comprises the following steps:
A- providing a rope 3 constituting the core of said armored cable
B- providing at least an armor winding band 1 previously wound in a reel of armor winding band
B1- unwinding said coil of armor winding band 1
C- making a permanent deformation of said armor winding band 1 by bending said armor winding band 1 substantially about the longitudinal axis of the band and/or an axis parallel to the axis of longitudinal development of the band, obtaining a so called preformed band 2 by drawing and/or hammering and/or lamination and/or rolling and/or extrusion and/or bending operations.
C1- winding said preformed band 2 in a coil of preformed band 2
D- covering said rope 3 by winding at least one, preferably two preformed bands 2 each one coming from a coil of preformed band made according to previous steps.

Thus advantageously the process for making the armored cable according to the present invention comprises also the step of permanently flattening deforming the band, in order to allow the subsequent elastic deformation at least partially flattening the band during the step hammering and winding the band on the rope.

The fact of having directly at least a preformed band makes possible to
provide a rope 3 constituting the core of said armored cable
provide the at least one so called preformed band 2, preferably at least two preformed bands, that is armor winding bands bent substantially about the longitudinal axis of the band and/or an axis parallel to the axis of longitudinal development of the band
covering said rope by winding at least one, preferably two, preformed bands 2, and in case hammering and/or rolling said preformed band/bands according to one, preferably various different radial directions in order to secure said preformed band/bands to said rope constituting the core of said armored cable, such that said preformed band elastically get deformed at least partially flattening said bent about the longitudinal axis of the band and/or an axis parallel to the axis of longitudinal development of the band.

Said method and said cable object of the present invention provides also said preformed band/bands to externally substantially completely cover the rope 3.

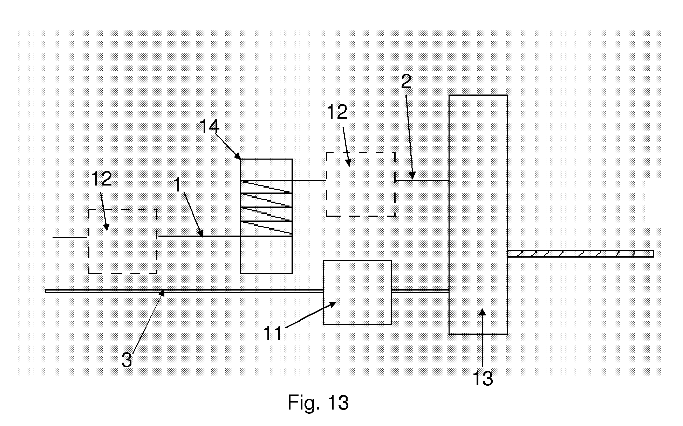

Referring to fig.13 the present invention relates also to an apparatus for making a cable, particularly a so called armored cable comprising:
at least one, preferably two coils 14 of armor winding band
at least a device 12 for permanently deforming said armor winding band 1 by bending said armor winding band 1 substantially about the longitudinal axis of the band and/or an axis parallel to the axis of longitudinal development of the band, obtaining a so called preformed band 2
at least one, preferably two devices 13 for winding said preformed band/bands 2,2' about said rope 3.

Therefore according to a first manufacturing case the apparatus according to the present invention allows to carry on the method previously described and claimed below.

Moreover according to a specification in the apparatus said permanent deformation device 12 for said armor winding band 1 to form said preformed band 2 is a drawing and/or hammering and/or lamination and/or rolling and/or extrusion and/or bending device for said armor winding band 1 by bending said armor winding band 1 substantially about the longitudinal axis of the band and/or an axis parallel to the axis of longitudinal development of the band, such as shown in fig.9.

According to an alternative embodiment the apparatus is provided to be modified by the fact that said device for the permanent deformation 12 is positioned upstream of said at least one coil 14, such that said armor winding band 1 is permanently deformed before being wound on said at least one reel.

As an alternative the apparatus provides said device for the permanent deformation 12 to be positioned immediately downstream of said one coil 14, such that said armor winding band 1 is permanently deformed immediately after unwinding the coil.

The permanent deformation device 12 is positioned immediately upstream of said at least one, preferably two winding devices 13, such that said armor winding band 1 is permanently deformed immediately before the winding of said band about said rope.

Moreover the apparatus is provided to further have an hammering tool for hammering said preformed band/bands 2 about said rope 3 such that said preformed band is elastically deformed at least partially flattening said bend about the longitudinal axis of the band and/or an axis parallel to the axis of longitudinal development of the band.

The hammering action occurs in the radial direction with respect to the rope according to one, preferably more than one directions.

## Claims

1. Method for making a cable, particularly a so called armored cable, comprising following steps:
A- providing a rope (3) constituting the core of said armored cable
B- providing at least an armor winding band-like member (1)
**characterized in that**
said armor winding band-like member is a so called preformed band (2) i.e. bent substantially about the longitudinal axis of the band and/or an axis parallel to the axis of longitudinal development of the band, and comprising in addition the step of
D- covering said rope by winding at least one, preferably two, preformed bands (2) such that the concave region of the bend of said preformed band is faced towards the rope.

2. Method for making a cable, particularly a so called armored cable, comprising following steps:
A- providing a rope (3) constituting the core of said armored cable
B- providing at least an armor winding band (1)
C- make a permanent deformation of said armor winding band (1) by bending said armor winding band (1) substantially about the longitudinal axis of the band and/or an axis parallel to the axis of longitudinal development of the band, achieving a so called preformed band (2)
D- covering said rope by winding at least one, preferably two, preformed bands (2) such that the concave region of the bend of said preformed band is faced towards the rope.

3. Method according to the preceding claim **characterized in that** said permanent deformation of said armor winding band (1) about substantially the longitudinal axis of the band and/or an axis parallel to the axis of longitudinal development of the band, obtaining a so called preformed band (2), occurs by drawing and/or hammering and/or lamination and/or rolling and/or extrusion and/or bending operations.

4. Method according to one or more of preceding claims **characterized in that** it comprises following steps:
A- providing a rope (3) constituting the core of said armored cable
B- providing at least an armor winding band (1) previously wound in a reel of armor winding band
B1- unwinding said coil of armor winding band (1)
C- making a permanent deformation of said armor winding band (1) by bending said armor winding band (1) substantially about the longitudinal axis of the band and/or an axis parallel to the axis of longitudinal development of the band, obtaining a so called preformed band (2) by drawing and/or hammering and/or lamination and/or rolling and/or extrusion and/or bending operations.
C1- winding said preformed band (2) in a coil of preformed band (2)
D- covering said rope (3) by winding at least one, preferably two preformed bands (2) each one coming from a coil of preformed band made according to previous steps.

5. Method for making a cable, particularly a so called armored cable, **characterized in that** it provides steps of:
A- providing a rope (3) constituting the core of said armored cable
B2- providing the at least one so called preformed band (2), preferably at least two preformed bands, i.e. armor winding bands bent substantially about the longitudinal axis of the band and/or an axis parallel to the axis of longitudinal development of the band
D- covering said rope by winding at least one, preferably two, preformed bands (2).

6. Method according to one or more of the preceding claims **characterized in that** it further comprises the step of:
E- hammering and/or rolling said preformed band/bands according at least one, preferably more than one different radial directions in order to secure said preformed band/bands to said rope constituting the core of said armored cable, such that said preformed band elastically get deformed at least partially flattening said bend about the longitudinal axis of the band and/or an axis parallel to the axis of longitudinal development of the band.

7. Method according to one or more of the preceding claims **characterized in that** said preformed band/bands externally substantially completely cover the rope (3).

8. Apparatus for making a cable, particularly a so called armored cable,
**characterized in that** it comprises:
at least one, preferably two, coils (14) of armor winding band
at least a device (11) for guiding a rope (3) constituting the core of said armored cable
at least a device (12) for permanently deforming said armor winding band (1) by bending said armor winding band (1) substantially about the longitudinal axis of the band and/or an axis parallel to the axis of longitudinal development of the band, achieving a so called preformed band (2)
at least one, preferably two devices (13) for winding said preformed band/bands (2) about said rope (3).

9. Apparatus according to the preceding claim **characterized in that** said permanent deformation device (12) for said armor winding band (1) to form said preformed band (2) is a drawing and/or hammering and/or lamination and/or rolling and/or extrusion and/or bending device for said armor winding band (1) by bending said armor winding band (1) substantially about the longitudinal axis of the band and/or an axis parallel to the axis of longitudinal development of the band.

10. Apparatus according to one or more of claims 8 to 9 modified by tha fact that said device for the permanent deformation (12) is positioned upstream of said at least one coil (14), such that said armor winding band (1) is permanently deformed before being wound on said at least one reel.

11. Apparatus according to one or more claims 8 to 10 **characterized in that** said device for the permanent deformation (12) is positioned immediately downstream of said one coil (14), such that said armor winding band (1) is permanently deformed immediately after unwinding the coil.

12. Apparatus according to one or more claims 8 to 11 **characterized in that** said device for the permanent deformation (12) is positioned immediately upstream of said at least one, preferably two winding devices (13), such that said armor winding band (1) is permanently deformed immediately before the winding of said band about said rope.

13. Apparatus according to one or more claims 8 to 12 **characterized in that** it further provides an hammering tool for hammering said preformed band/bands (2) about said rope (3) such that said preformed band (2) is elastically deformed at least partially flattening said bend about the longitudinal axis of the band and/or an axis parallel to the axis of longitudinal development of the band.

14. Apparatus according to one or more claims 8 to 13 **characterized in that** it carries on the method according to one or more claims 1 to 6.

15. Cable particularly an armored cable comprising at least a rope (3) constituting the core of said armored cable, about which rope (3) at least one, preferably two armor winding elongated members are helically wound
**characterized in that**
said armor winding elongated member/members or armor band/bands are a so called preformed band/bands (2), i.e. bent about the longitudinal axis of the band and/or an axis parallel to the axis of longitudinal development of the band such that the concave region of the bend of said preformed band is faced towards the rope.

16. Cable according to the preceding claim **characterized in that** said preformed cable (2) has a cross section like a circunference arc i.e. bent about the longitudinal axis of the band, and due to the fact of winding and/or hammering said preformed band on said rope, said preformed band elastically get deformed at least partially flattening said bend about the longitudinal axis of the band and/or an axis parallel to the axis of longitudinal development of the band.

17. Cable according to one or more of claims 15 to 16 **characterized in that** said preformed band (2) has a cross section like a circunference arc with the band not wound on the rope and when the preformed band (2) is wound on the rope (3) said circunference arc-like cross section is deformed at least partially flattening said bend by at least a partial elastic deformation.

18. Cable according to one or more of claims 15 to 17 **characterized in that** said rope (3) is a multiwire rope, i.e. it is composed of two, three or more rope wires.

19. Cable according to one or more of claims 15 to 18 **characterized in that** the profile of the inner surface of said preformed band wound on said rope at least partially follows the outer profile of said multiwire rope (3) creating at least partially on said profile of the inner surface of said preformed band a series of consecutive depressions and projections associated to corresponding projections and depressions of the outer profile of said multiwire rope (3).

20. Cable according to one or more of claims 15 to 19 **characterized in that** the multiwire rope is an helicoidal one and particularly it is of the so called "spiroid" and/or "strand" type.

21. Cable according to one or more of claims 15 to 20, **characterized in that** it is made according to the method of one or more of claims 1 to 7.

22. Cable according to one or more of claims 15 to 21 **characterized in that** it is made by an apparatus according to one or more of claims 8 to 14.

23. Cable according to one or more of the preceding claims **characterized in that** the rope is made of simple uncovered steel/galvanized steel/stainless steel.

24. Cable according to one or more of the preceding claims **characterized in that** the winding member or preformed band is made of simple uncovered steel/stainless steel.

25. Cable according to one or more of the preceding claims **characterized in that** the tensile strength of the preformed band is from 500 N/mm² to 1400 N/mm², preferably from 600 N/mm² to 1000 N/mm².

26. Cable according to one or more of the preceding claims **characterized in that** there are provided two, three, four or more armor winding elongated members and wherein at least one of said armor winding elongated members is composed of a preformed band (2) i.e. bent about the longitudinal axis of the band and/or an axis parallel to the axis of longitudinal development of the band said bend being a permanent deformation of an armor winding band having a flat section obtained by drawing and/or hammering and/or laminating and/or rolling and/or extruding and/or bending said armor winding band (1) by bending said armor winding band (1) substantially about the longitudinal axis of the band and/or an axis parallel to the axis of longitudinal development of the band.

27. Method according to one or more of the preceding claims **characterized in that** it provides as a further step to plastic-coat and/or cover the cable with synthetic and/or plastic material.

28. Cable according to one or more of the preceding claims **characterized in that** it provides an outer covering, preferably made of synthetic and/or plastic material.

29. Cable according to one or more of the preceding claims **characterized in that** the circumference angle about which the preformed band is bend is of 30° to 90°, preferably of 60°.

30. Cable according to one or more of the preceding claims **characterized in that** the radius of curvature of the preformed band is 1 to 9 mm and preferably 4 mm.
